# EUROPEAN PATENT APPLICATION

(11) **EP 4 144 488 A1**
(43) Date of publication of application: **08.03.2023**
(21) Application number: 21812956.7
(22) Date of filing: 26.05.2021
(51) Int. Cl.: B25J 11/00

(54) **BIASING UNIT AND LUMBAR ASSISTANCE DEVICE**

(30) Priority: 29.05.2020 JP 2020094882
(71) Applicant: Innophys Co., Ltd., Tokyo 162-0825 (JP)
(72) Inventor: KOBAYASHI Hiroshi, Tokyo 162-8601 (JP); SEGAWA Yushiro, Tokyo 162-8601 (JP)
(74) Representative: Grünecker Patent- und Rechtsanwälte PartG mbB
(86) International application number: PCT/JP2021/019922
(87) International publication number: WO 2021/241614

(57) **Abstract**

The present invention achieves a size reduction of a lumbar assistance device. A biasing unit 2 comprises: a base member 20; a downward swing member 21 which is attached to a lower section of a base member 20 and swings back and forth with respect to the base member 20 integrally with a thigh support member 3; a tension spring 22, one end of which is attached to the base member 20, another end of which is attached to the downward swing member 21, and which biases the downward swing member 21 rearward when the downward swing member 21 has swung forward; an upward swing member 23 which is attached to an upper section of the base member 20 and swings back and forth with respect to the base member 20 integrally with an upper body support member 4; and a gas spring 24, one end of which is attached to the base member 20, another end of which is attached to the upward swing member 23, and which biases the upward swing member 23 rearward when the upward swing member 23 has swung forward.

## Description

### TECHNICAL FIELD

The present invention relates to a biasing unit and a lumbar assistance device.

### BACKGROUND ART

A half-sitting work assistance device (lumbar assistance device) that reduces a burden on a lower back of a half-sitting worker as much as possible is known (see, for example, Patent Document 1).

Patent Document 1: Japanese Unexamined Patent Application, Publication No.2009-023828

### DISCLOSURE OF THE INVENTION

### Problems to be Solved by the Invention

For such a lumbar assistance device, a size reduction is desired.

An object of present invention, which has been made in view of the above problem, is to provide a biasing unit and a lumbar assistance device in which a size reduction is achieved.

### Means for Solving the Problems

(1) The present invention provides a biasing unit (for example, an after-mentioned biasing unit 2) for use in a lumbar assistance device (for example, an after-mentioned lumbar assistance device 1) constituting an exoskeleton, the biasing unit including: a base member (for example, an after-mentioned base member 20) disposed on a side of a lumbar of a human body (for example, an after-mentioned user P); a downward swing member (for example, an after-mentioned downward swing member 21) which is attached to a lower section in the base member to be rotatable around an axis along a left-right direction of the human body and to which a thigh support member (for example, an after-mentioned thigh support member 3) supporting a thigh of the human body from front is fixed, the downward swing member swinging back and forth with respect to the base member integrally with the thigh support member; downward biasing means (for example, an after-mentioned tension spring 22), one end of which is attached to the base member to be rotatable around the axis along the left-right direction of the human body, and another end of which is attached to the downward swing member to be rotatable around the axis along the left-right direction of the human body, the downward biasing means biasing the downward swing member rearward when the downward swing member swings forward; an upward swing member (for example, an after-mentioned upward swing member 23) which is attached to an upper section in the base member to be rotatable around the axis along the left-right direction of the human body and to which an upper body support member (for example, an after-mentioned upper body support member 4) supporting an upper body of the human body is fixed, the upward swing member swinging back and forth with respect to the base member integrally with the upper body support member; and upward biasing means (for example, an after-mentioned gas spring 24), one end of which is attached to the base member to be rotatable around the axis along the left-right direction of the human body, and another end of which is attached to the upward swing member to be rotatable around the axis along the left-right direction of the human body, the upward biasing means biasing the upward swing member rearward when the upward swing member swings forward.
(2) The present invention also provides the biasing unit according to the above (1), wherein the downward biasing means is a tension spring.
(3) The present invention further provides the biasing unit according to the above (1) or (2), wherein the upward biasing means is a gas spring.
(4) The present invention further provides a lumbar assistance device including the biasing unit according to any one of the above (1) to (3), the thigh support member, and the upper body support member, to constitute an exoskeleton.
(5) The present invention further provides the lumbar assistance device according to the above (4), wherein the upper body support member supports the upper body of the human body from behind.
(6) The present invention also provides the lumbar assistance device according to the above (4) or (5), including: a first belt part (for example, an after-mentioned first belt part 161) wrapped around a lower back on a back side of the human body; a second belt part (for example, an after-mentioned second belt part 162) wrapped around the lower back on a front side in one of left and right directions of the human body; a third belt part (for example, an after-mentioned third belt part 163) disposed adjacent to a lower part of a posterior part of a gluteus maximus muscle of the human body to extend left and right with respect to buttocks of the human body; a fourth belt part (for example, an after-mentioned fourth belt part 164) connected to one end of the third belt part, and wrapped around the lower back on a front side in the other of the left and right directions of the human body; and a belt support portion attached to the base member so that the first belt part, the second belt part, the third belt part and the fourth belt part are rotatable around the axis along the left-right direction of the human body, wherein the belt support portion includes a first belt support member (for example, an after-mentioned left belt support member 127) and a second belt support member (for example, an after-mentioned right belt support member 126), one end of the first belt part is fixed to the first belt support member, the other end of the first belt part is fixed to the second belt support member, one end of the second belt part is fixed to the first belt support member, one end of the third belt part is fixed to the first belt support member, the other end of the third belt part is connected to one end of the fourth belt part, and is slidably supported with respect to the second belt support member, and the other end of the second belt part and the other end of the fourth belt part are coupled.
(7) The present invention also provides the lumbar assistance device according to the above (6), wherein one end of the first belt part, the other end of the first belt part, one end of the second belt part and one end of the fourth belt part are arranged at a position so as to be coincidental with one another on the human body in an up-down direction.
(8) The present invention further provides the lumbar assistance device according to the above (6) or (7), wherein the first belt support member and the second belt support member are each constituted of a plate-shaped member in which a through hole (for example, after-mentioned slits 426j and 426k) is formed, and the third belt part is passed through the through hole and folded back.
(9) The present invention further provides the lumbar assistance device according to any one of the above (6) to (8), wherein one end of the second belt part is connected to one end of the first belt part.

### Effects of the Invention

According to present invention, a biasing unit and a lumbar assistance device in which a size reduction is achieved can be provided.

### BRIEF DESCRIPTION OF THE DRAWINGS

FIG. 1 is a side view of a lumbar assistance device according to a first embodiment of present invention;
FIG. 2 is a front view of the lumbar assistance device shown in FIG. 1;
FIG. 3A is a side view of the lumbar assistance device shown in FIG. 1 and shows a state where a user wearing the lumbar assistance device is standing;
FIG. 3B is a side view of the lumbar assistance device shown in FIG. 1 and shows a state where the user wearing the lumbar assistance device advances user's foot forward;
FIG. 3C is a side view of the lumbar assistance device shown in FIG. 1 and shows a state where the user wearing the lumbar assistance device bends down;
FIG. 4 is a graph showing a relationship between a rotation angle and an assistance force in the lumbar assistance device shown in FIG. 1, in which a horizontal axis indicates a sum of a rotation angle of a thigh support member and a rotation angle of an upper body support member, and a vertical axis indicates the assistance force by the lumbar assistance device;
FIG. 5 is an explanatory view showing a first belt part, a second belt part, a third belt part, and a fourth belt part of a lumbar assistance device according to a second embodiment of the present invention;
FIG. 6 is a perspective view showing a belt support plate-shaped portion of a right belt support member of the lumbar assistance device according to the second embodiment of the present invention;
FIG. 7 is an explanatory view showing a right belt support member of a lumbar assistance device according to a third embodiment of the present invention;
FIG. 8 is a front view showing a right belt support member of a lumbar assistance device according to a fourth embodiment of the present invention;
FIG. 9 is a side view showing the right belt support member of the lumbar assistance device according to the fourth embodiment of the present invention;
FIG. 10 is a side view showing a right belt support member of a lumbar assistance device according to a fifth embodiment of the present invention;
FIG. 11 is a side view showing a right belt support member of a lumbar assistance device according to a sixth embodiment of the present invention; and
FIG. 12 is a side view of the lumbar assistance device according to the sixth embodiment of the present invention.

### PREFERRED MODE FOR CARRYING OUT THE INVENTION

Hereinafter, with reference to the drawings, a lumbar assistance device 1 according to embodiments of the present invention will be described in detail.

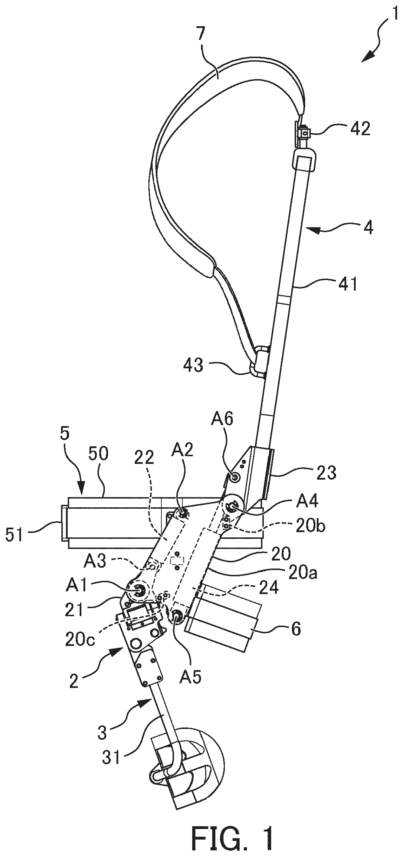

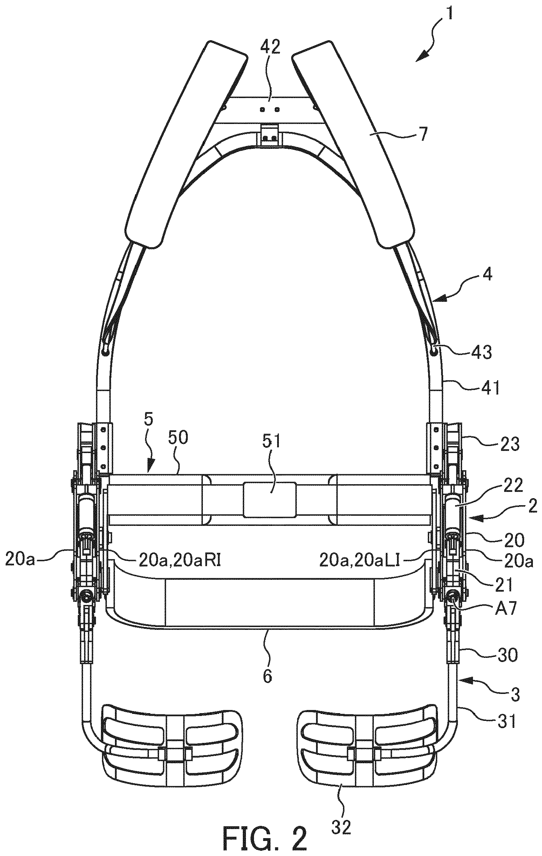

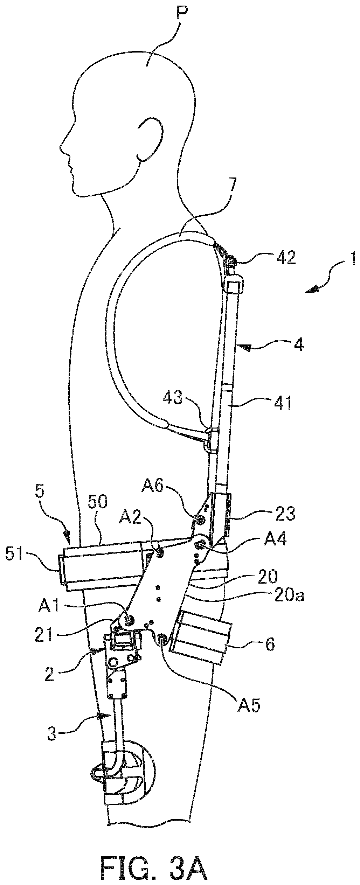

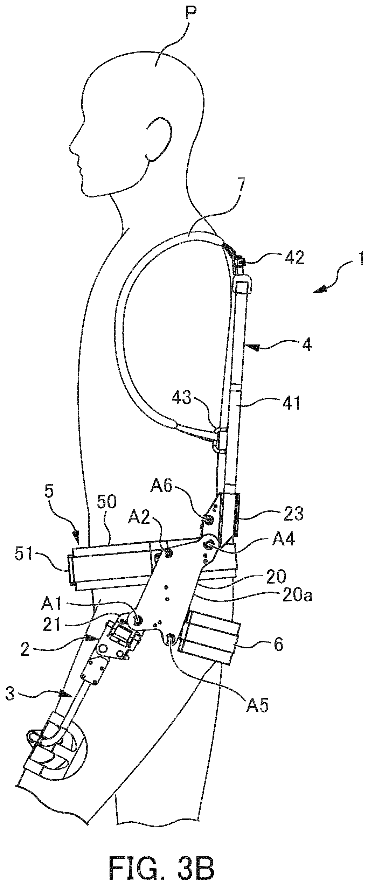

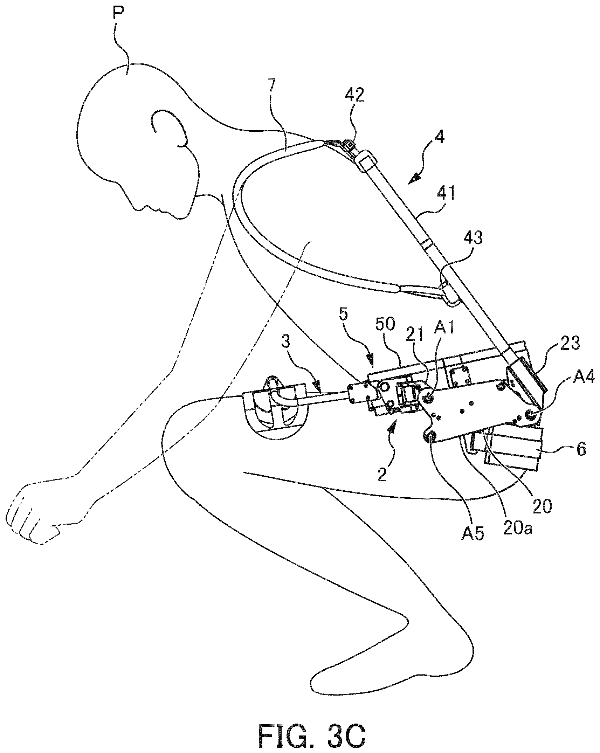

First, a configuration of the lumbar assistance device 1 will be described with reference to FIGS. 1, 2, 3A, 3B and 3C. FIG. 1 is a side view of the lumbar assistance device 1. FIG. 2 is a front view of the lumbar assistance device 1 shown in FIG. 1. FIG. 3A is a side view of the lumbar assistance device 1 shown in FIG. 1 and shows a state where a user P wearing the lumbar assistance device 1 is standing. FIG. 3B is a side view of the lumbar assistance device 1 shown in FIG. 1 and shows a state where the user P wearing the lumbar assistance device 1 advances user's foot forward. FIG. 3C is a side view of the lumbar assistance device 1 shown in FIG. 1 and shows a state where the user P wearing the lumbar assistance device 1 bends down.

The lumbar assistance device 1 shown in FIGS. 1, 2, 3A, 3B and 3C constitutes an exoskeleton, and the user (wearer) P carries the device like a backpack and wears the device alone, which is fitted to a body of the user P. The lumbar assistance device 1 generates an assistance force by a tension spring (downward biasing means) 22 and a gas spring (upward biasing means) 24 with respect to a load on a lumbar of the user P, and aids in an operation of lifting a luggage or the like by the user P, or the like. Specifically, the lumbar assistance device 1 includes a pair of left and right biasing units 2, a pair of left and right thigh support members 3, an upper body support member 4, a lower back belt 5, a buttock belt 6, and a pair of left and right shoulder belts 7.

Each of the pair of left and right biasing units 2 is attached to a side of the lumbar of the user P and generates the assistance force given to the lumbar of the user P. Specifically, each of the pair of left and right biasing units 2 includes a base member 20, a downward swing member 21, the tension spring 22, an upward swing member 23, and the gas spring 24.

The base member 20 is attached to each of left and right sides in the lower back belt 5 to be rotatable around an axis (not shown) along a left-right direction of the user P, and is disposed on each of left and right sides of the lumbar of the user P. The base members 20 include a pair of left and right base plates 20a and 20a, and rotation limit blocks 20b and 20c, respectively.

The pair of left and right base plates 20a and 20a has a plate shape long in the up-down direction in a state where the user P is standing as shown in FIG. 3A, and are arranged parallel to each other to form a gap between the pair of left and right base plates 20a and 20a in the left-right direction of the user P. Between the pair of base plates 20a and 20a, the tension spring 22 and the gas spring 24 are housed.

The rotation limit block 20b is fixed to an upper portion of the base plate 20a and has a rectangular parallelepiped shape in the side view shown in FIG. 1. A part of the rotating upward swing member 23 abuts on a side surface of the rectangular parallelepiped rotation limit block 20b to limit the rotation of the upward swing member 23 to a desired angle range.

The rotation limit block 20c is fixed to a lower portion of the base plate 20a and has a rectangular parallelepiped shape in the side view shown in FIG. 1. A part of the rotating downward swing member 21 abuts on a side surface of the rectangular parallelepiped rotation limit block 20c, thereby limiting the rotation of the downward swing member 21 to a desired angle range.

The downward swing member 21 is attached to a lower and front portion of the base member 20 to be rotatable around an axis A1 along the left-right direction of the user P. A lower portion of the downward swing member 21 is coupled to be rotatable around an axis A7 (see FIG. 2) along a front-rear direction with respect to an upper portion of the downward swing member 21 when the user P is in the standing state shown in FIG. 3A. The thigh support member 3 is fixed to the lower portion of the downward swing member 21, and the downward swing member 21 swings back and forth with respect to the base member 20 integrally with the thigh support member 3.

In the tension spring 22, one end (upper end) is attached to an upper and front portion of the base member 20 to be rotatable around an axis A2 along the left-right direction of the user P, and another end (lower end) is attached to an upper portion of the downward swing member 21 to be rotatable around an axis A3 along the left-right direction of the user P. The tension spring 22 is pulled when the downward swing member 21 swings forward and biases and swings the downward swing member 21 rearward.

The upward swing member 23 is attached to an upper and rear portion of the base member 20 to be rotatable around an axis A4 along the left-right direction of the user P. The upper body support member 4 is fixed to the upward swing member 23, and the upward swing member 23 swings back and forth with respect to the base member 20 integrally with the upper body support member 4.

In the gas spring 24, one end (lower end) is attached to a lower and rear portion of the base member 20 to be rotatable around an axis A5 along the left-right direction of the user P, and another end (upper end) is attached to an upper portion of the upward swing member 23 to be rotatable around an axis A6 along the left-right direction of the user P. The gas spring 24 is compressed when the upward swing member 23 swings forward and biases and swings the upward swing member 23 rearward.

Each of the pair of left and right thigh support members 3 is attached to a thigh of the user P and supports the thigh of the user P from front. Each of the pair of left and right thigh support members 3 swings back and forth with respect to the base member 20 integrally with the downward swing member 21. Specifically, as shown in FIG. 2, each of the pair of left and right thigh support members 3 includes a fixture 30, a frame 31, and a support 32.

The fixture 30 is fixed to one end (upper end) of the frame 31 and is fixed to the lower portion of the downward swing member 21. The frame 31 is configured in a substantially L-shape as shown in FIG. 2 and has one end (upper end) fixed to the lower portion of the downward swing member 21 via the fixture 30 and another end (lower end) to which the support 32 is rotatably fixed and supported with respect to the other end (lower end). The frame 31 is disposed to face from the side of the lumbar of the user P to front of the thigh. The support 32 is fixed to a lower end of the frame 31 and supports the thigh of the user P from front.

The upper body support member 4 is attached to an upper body of the user P and supports the upper body of the user P from behind. The upper body support member 4 swings back and forth with respect to the pair of left and right base members 20 integrally with each of the pair of left and right upward swing members 23. Specifically, the upper body support member 4 includes a frame 41, an attachment 42, and a pair of left and right hooks 43.

The frame 41 is configured in a substantially U-shape as shown in FIG. 2 and has each of opposite ends facing downward and fixed to the upward swing member 23. The frame 41 is disposed on a back side of the upper body of the user P.

The attachment 42 is attached to an upper end of the frame 41 to be rotatable around an axis (denoted with no reference numeral) along the up-down direction. One end (upper end) in each of the pair of left and right shoulder belts 7 is fixed to a front portion of the attachment 42, whereby the attachment 42 attaches one end (upper end) of each of the pair of left and right shoulder belts 7 to the upper end in the frame 41.

Each of the pair of left and right hooks 43 and 43 is provided on each of left and right sides in the frame 41. Each of the pair of left and right hooks 43 and 43 attaches one end (lower end) in each of the pair of left and right shoulder belts 7 and 7 to each of left and right front portions of the frame 41.

The lower back belt 5 is wrapped around the lower back of the user P, to fix the lumbar assistance device 1 around the lower back of the user P. The lower back belt 5 performs a similar function to a waist belt of a general backpack. Specifically, the lower back belt 5 includes a belt body 50 and a pair of left and right buckles 51.

The belt body 50 is formed in a strip shape, and a pair of ends of the belt body 50 are wrapped around the lower back of the user P to be arranged in front of the user P. The pair of left and right buckles 51 are attached to the pair of ends of the belt body 50, respectively. The pair of left and right buckles 51 make the lower back belt 5 fittable and removable with respect to the user P.

The buttock belt 6 is disposed to extend left and right with respect to buttocks of the user P, and prevents a position of the lumbar assistance device 1 from moving with respect to the user P. Specifically, the buttock belt 6 is disposed adjacent to a lower part of a posterior part of a gluteus maximus muscle of the user P.

The pair of left and right shoulder belts 7 are arranged in a pair on front left and right in the upper body of the user P. Each of the pair of left and right shoulder belts 7 has the upper end attached to a front surface of the attachment 42, and has a lower end attached to each of the pair of left and right hooks 43. The pair of left and right shoulder belts 7 perform a similar function to a shoulder harness of the general backpack.

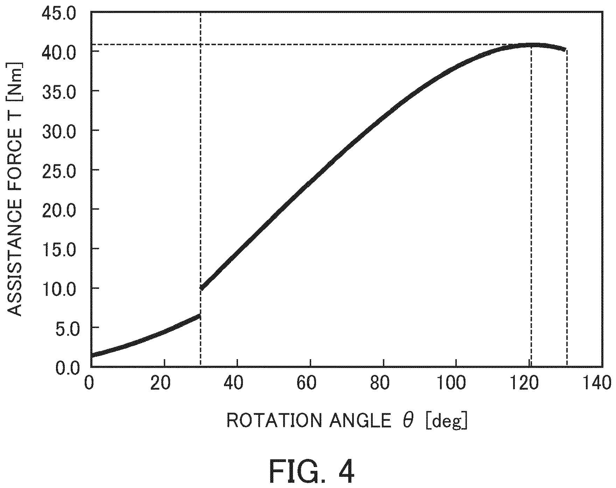

Next, a relationship between a rotation angle and the assistance force in the lumbar assistance device 1 will be described using FIG. 4. FIG. 4 is a graph showing the relationship between the rotation angle and the assistance force in the lumbar assistance device 1 shown in FIG. 1, in which a horizontal axis indicates a sum of a rotation angle of the thigh support member 3 and a rotation angle of the upper body support member 4, and a vertical axis indicates the assistance force by the lumbar assistance device 1.

In FIG. 4, the rotation angle in the lumbar assistance device 1 is an angle when the frame 31 in the thigh support member 3 and the frame 41 in the upper body support member 4 are seen from side, and the angle is a sum of a rotation angle of the frame 31 and a rotation angle of the frame 41, when an angle in the state where the user P is standing (reference state shown in FIG. 3A) is defined as 0 degrees, an angle in a direction in which the user P rounds the lumbar forward is defined as a positive angle, and the reference state shown in FIG. 3A is defined as a reference.

When the angle is 0 degrees, a part of the rotating downward swing member 21 does not abut on a side surface of the rectangular parallelepiped rotation limit block 20c. When the frame 31 further rotates about 30 degrees rearward around the axis A1 from this state to reach a state shown in FIG. 1, a part of the rotating downward swing member 21 abuts on the side surface of the rectangular parallelepiped rotation limit block 20c, whereby the rotation of the downward swing member 21 is regulated at the position, and the downward swing member 21 is restricted so that the member does not rotate less than that position (the frame 31 is further rearward around the axis A1). According to this configuration, when the user P performs walking or the like, the support 32 is prevented from being away from the thigh of the user P, and the support 32 is always maintained in an abutting state on the thigh of the user P.

Further, when the angle is 0 degrees, a part of the rotating upward swing member 23 abuts on the side surface of the rectangular parallelepiped rotation limit block 20b, whereby the rotation of the upward swing member 23 is regulated at a position of 0 degrees, and the upward swing member 23 is restricted so that the member does not rotate less than that position (the frame 41 is further rearward around the axis A4).

Further, when the angle is 0 degrees, a positional relationship is obtained in which the axis A6 is vertically above the axis A4, the axis A2 is in front of and below the axes A4 and A6, the axis A5 is vertically above the axis A2, and the axis A1 is in front of the axes A2 and A5, below the axis A2 and above the axis A5. This inhibits a position where the support 32 abuts on the thigh of the user P from being shifted and inhibits a position where the frame 41 faces the back from being shifted.

When the user P advances user's foot forward by walking or the like, that is, when the rotation angle in the lumbar assistance device 1 shown in FIG. 4 is from 0 degrees to 30 degrees, the thigh support member 3 swings forward with respect to the base member 20, and hence the assistance force by the tension spring 22 is generated. A torque that biases the lumbar of the user P by the tension spring 22 is about 2.0 [N-m] when the angle is 0 degrees (see FIG. 3A), and about 6.0 [N-m] when the angle is 30 degrees (see FIG. 3B), and the torque indicates a value smoothly fluctuating and increasing with fluctuation in a range from 0 to 30 degrees.

When the user P rounds user's lumbar forward (bends down), that is, when the rotation angle in the lumbar assistance device 1 shown in FIG. 4 exceeds 30 degrees to 130 degrees, a part of the rotating downward swing member 21 abuts on the side surface of the rectangular parallelepiped rotation limit block 20c, whereby the rotation of the downward swing member 21 is regulated at a position of a rotation angle of 30 degrees and restricted so that the member does not rotate further, and hence the upper body support member 4 swings forward with respect to the base member 20. Thereby, an assistance force is generated by the gas spring 24. A torque that biases the lumbar of the user P by the gas spring 24 is about 10.0 [N·m] when the angle slightly exceeds 30 degrees, is a maximum value of about 40.8 [N·m] when the angle is 121 degrees and is about 40.2 [N·m] when the angle is 130 degrees (see FIG. 3C). The torque that biases the lumbar of the user P by the gas spring 24 has a value smoothly fluctuating and increasing in a range exceeding 30 degrees to 121 degrees and a value smoothly fluctuating and decreasing in a range exceeding 121 degrees to 130 degrees.

According to the above-described embodiment, the following effects can be exhibited. The biasing unit 2 is for use in the lumbar assistance device 1. Specifically, the biasing unit 2 includes the base member 20 disposed on the side of the lumbar of the user P; the downward swing member 21 which is attached to a lower section in the base member 20 to be rotatable around the axis along the left-right direction of the user P and to which the thigh support member 3 supporting the thigh of the user P from front is fixed, the downward swing member swinging back and forth with respect to the base member 20 integrally with the thigh support member 3; the tension spring 22, one end of which is attached to the base member 20 to be rotatable around the axis along the left-right direction of the user P, and the other end of which is attached to the downward swing member 21 to be rotatable around the axis along the left-right direction of the user P, the tension spring biasing the downward swing member 21 rearward when the downward swing member 21 swings forward; the upward swing member 23 which is attached to an upper section in the base member 20 to be rotatable around the axis along the left-right direction of the user P and to which the upper body support member 4 supporting the upper body of the user P is fixed, the upward swing member swinging back and forth with respect to the base member 20 integrally with the upper body support member 4; and the gas spring 24, one end of which is attached to the base member 20 to be rotatable around the axis along the left-right direction of the user P, and the other end of which is attached to the upward swing member 23 to be rotatable around the axis along the left-right direction of the user P, the gas spring biasing the upward swing member 23 rearward when the upward swing member 23 swings forward. Then, the lumbar assistance device 1 includes the biasing unit 2, the thigh support member 3, and the upper body support member 4.

This configuration makes it possible to achieve a size reduction of the biasing unit in which, when the user P advances user's foot forward by walking or the like, a weak assistance force can be generated by the tension spring 22, and when the user P rounds user's lumbar forward (bends down), a strong assistance force can be generated by the gas spring 24, and as a result, it is possible to achieve a size reduction of the lumbar assistance device 1 including the biasing unit.

Further, in the lumbar assistance device 1, the upper body support member 4 supports the upper body of the user P from behind. According to this configuration, compared with a case where the upper body of the user P is supported from front, the upper body support member 4 of the lumbar assistance device 1 can assist the support of the upper body of the human body without causing the user P to feel pressure or pain in the chest.

Next, a second embodiment of present invention will be described. A lumbar assistance device according to the second embodiment is different from the lumbar assistance device 1 according to the first embodiment in that the device includes a first belt part 161, a second belt part 162, a third belt part 163, and a fourth belt part 164 in place of the lower back belt 5 and the buttock belt 6 in the first embodiment. The same member as in the first embodiment is denoted with the same reference numeral as in the first embodiment and will not be described.

In the following embodiment, a left side as seen from a user wearing the lumbar assistance device is defined as the left side (L), the opposite side is defined as a right side (R), an upper side as seen from the user wearing the lumbar assistance device is defined as an upside (Up), the opposite side is defined as a downside (Dw), a front side as seen from the user wearing the lumbar assistance device is defined as the front side (Fr), the opposite side is defined as a rear side (Rr), and these sides are described with arrows in respective drawings.

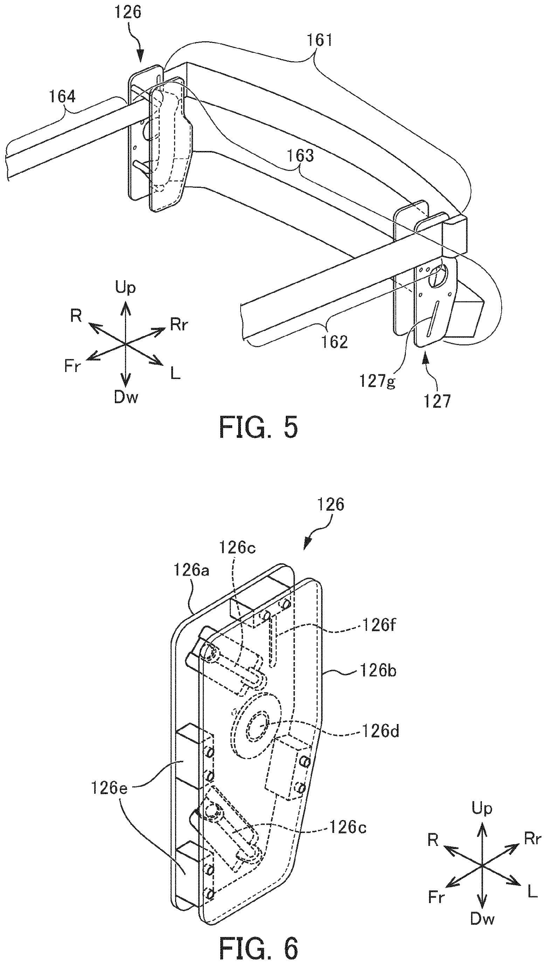

FIG. 5 is an explanatory view showing the first belt part 161, the second belt part 162, the third belt part 163, and the fourth belt part 164. FIG. 6 is a perspective view showing a belt support plate-shaped portion 126a of a right belt support member 126.

As shown in FIG. 5, the lumbar assistance device includes the first belt part 161, the second belt part 162, the third belt part 163, and the fourth belt part 164.

Specifically, the first belt part 161, the second belt part 162, the third belt part 163 and the fourth belt part 164 are belt support members constituted of the right belt support member 126 and a left belt support member 127, and these belt parts are supported by a belt support member attached to a base member 20 (see FIG. 1 and the like) to be rotatable around an axis along a left-right direction of a human body. The right belt support member 126 is rotatably supported on a base plate 20aRI closer to a center in the left-right direction of the human body in a pair of base plates 20a and 20a on the right side (see FIG. 2 and the like). The left belt support member 127 is rotatably supported on a base plate 20aLI closer to the center in the left-right direction of the human body in a pair of base plates 20a and 20a on the left side.

The right belt support member 126 and the left belt support member 127 have a symmetrical configuration. For this reason, in the following description, only the right belt support member 126 will be described, and the left belt support member 127 will not be described.

As shown in FIG. 6, the right belt support member 126 has two substantially rectangular plate-shaped portions of a pair of the belt support plate-shaped portion 126a and a cover plate-shaped portion 126b. The belt support plate-shaped portion 126a is disposed to orient a longitudinal direction of the belt support plate-shaped portion 126a in an up-down direction. Similarly, the cover plate-shaped portion 126b is disposed to orient a longitudinal direction of the cover plate-shaped portion 126b in the up-down direction.

A through hole 126d is formed in the belt support plate-shaped portion 126a, and an unshown rotary shaft extending from the base plate 20a is inserted into the through hole 126d. Thereby, the belt support plate-shaped portion 126a is rotatably supported by the base plate 20a in a parallel positional relationship to the base plate 20a.

The belt support plate-shaped portion 126a is provided with a pair of upper and lower rod-shaped portions 126c and 126c. Each of the pair of rod-shaped portions 126c and 126c is fixed to orient a longitudinal direction of the rod-shaped portion 126c, 126c diagonally from upper front to lower rear and is fixed parallel to a plate-shaped surface of the belt support plate-shaped portion 126a. The lower rod-shaped portion 126c is disposed to be oriented in an inclination direction closer to a vertical direction than the upper rod-shaped portion 126c.

The belt support plate-shaped portion 126a is provided with a rectangular parallelepiped column portion 126e. The column portion 126e is provided on the same side as a side of the belt support plate-shaped portion 126a provided with the rod-shaped portion 126c, and the cover plate-shaped portion 126b is fixed to a tip portion of the column portion 126e in a positional relationship that is coincidental with the belt support plate-shaped portion 126a in the left-right direction.

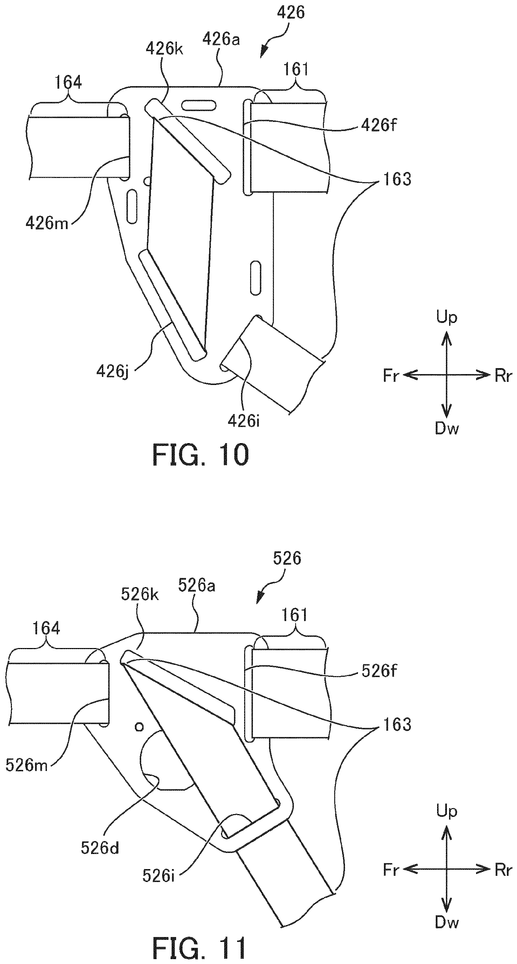

The third belt part 163 is hung on each rod-shaped portion 126c. In FIG. 5, an upper belt that bridges over the right belt support member 126 and the left belt support member 127 is defined as the first belt part 161, and a lower belt is defined as the third belt part 163. Further, a belt part extending forward from the left belt support member 127 is defined as the second belt part 162, and a belt part extending forward from the right belt support member 126 is defined as the fourth belt part 164 for the description. Further, in the vicinity of the right belt support member 126, 226, 326, 426, 526 described later, a portion of the third belt part 163 facing the right belt support member 126, 226, 326, 426, 526 in the left-right direction (for example, the portion of the third belt part 163 shown in FIG. 11) is defined as a right end of the third belt part 163.

The first belt part 161 is wrapped around a lower back on a back side of the human body of the user. The second belt part 162 is wrapped around the lower back on a left front side that is one in left and right directions of the human body. The third belt part 163 is disposed adjacent to a lower part of a posterior part of a gluteus maximus muscle of the human body to extend left and right with respect to buttocks of the human body. The fourth belt part 164 is connected to one end of the third belt part 163 and is wrapped around the lower back on the other front side in the left and right directions of the human body.

As shown in FIG. 5, a right end of the first belt part 161 is passed through an upper slit 126f (see FIG. 6) of the right belt support member 126 and fixed. A left end of the first belt part 161 is passed through an unshown slit in an upper portion of the left belt support member 127 and fixed and is continuously linked and integrally connected to a rear end of the second belt part 162. Thereby, the rear end of the second belt part 162 is fixed to the left belt support member 127. The second belt part 162 extends in a forward direction of the human body, and a front end of the second belt part 162 is provided with an unshown buckle similar to the buckle of the first embodiment.

A left end of the third belt part 163 is passed through a slit 127g (see FIG. 5) in a lower portion of the left belt support member 127 and fixed. The right end of the third belt part 163 is hung on the lower rod-shaped portion 126c (see FIG. 6) of the right belt support member 126 and folded upward, and further hung on the upper rod-shaped portion 126c and folded in the forward direction. Then, as shown in FIG. 5, the right end of the third belt part 163 is continuously linked and integrally connected to a rear end of the fourth belt part 164. Thereby, by pulling a front end of the fourth belt part 164 in the forward direction as described later, a portion of the third belt part 163 hung on the rod-shaped portion 126c slides with respect to the rod-shaped portion 126c of the right belt support member 126. A front end of the fourth belt part 164 is provided with an unshown buckle that is similar to the buckle of the first embodiment and that can be coupled to the unshown buckle of the second belt part 162.

As described above, the first belt part 161, the second belt part 162, the third belt part 163 and the fourth belt part 164 are supported on the right belt support member 126 and the left belt support member 127, and thereby, as shown in FIG. 5, the left end of the first belt part 161, the right end of the first belt part 161, the rear end of the second belt part 162 and the rear end of the fourth belt part 164 are arranged at a position so as to be coincidental with one another on the human body in an up-down direction.

Next, an operation of tightening the first belt part 161, the second belt part 162, the third belt part 163 and the fourth belt part 164 when fitting the lumbar assistance device to the human body will be described. First, in a state where the user is standing, the user passes left and right arms through a pair of left and right shoulder belts 7 (see FIG. 1) to arrange the belts on left and right shoulders of the user, respectively. Further, the user places the support 32 (see FIG. 2) to abut on the thigh from front of the thigh.

Next, by pulling the front end of the second belt part 162 and the front end of the fourth belt part 164, each provided with the unshown buckle, in the forward direction, a length of the third belt part 163 between the right belt support member 126 and the left belt support member 127 decreases, and the third belt part 163 comes in close contact with the lower part of the posterior part of the gluteus maximus muscle of the human body. Further, a length of the first belt part 161 between the right belt support member 126 and the left belt support member 127 does not change, and the first belt part 161 is attracted and comes in close contact around the lower back on the back side of the human body.

Then, by coupling the unshown buckle of the second belt part 162 and the unshown buckle of the fourth belt part 164, the second belt part 162 and the fourth belt part 164 are closely wrapped around the lower back on the front side of the human body, and thereby the first belt part 161, the second belt part 162 and the fourth belt part 164 are closely wrapped once around the lower back of the human body of the user. At this time, the third belt part 163 is disposed in close contact with the lower part of the posterior part of the gluteus maximus muscle of the human body to extend left and right with respect to the buttocks of the human body.

According to the above-described embodiment, the following effects can be exhibited. In the lumbar assistance device, the left end as one end of the first belt part 161 is fixed to the left belt support member 127 as a first belt support member, the right end as the other end of the first belt part 161 is fixed to the right belt support member 126 as a second belt support member, the rear end as one end of the second belt part 162 is fixed to the left belt support member 127, the left end as one end of the third belt part 163 is fixed to the left belt support member 127, the right end as the other end of the third belt part 163 is connected to the rear end as one end of the fourth belt part 164, and slidably supported with respect to the right belt support member 126, and the front end as the other end of the second belt part 162 and the front end as the other end of the fourth belt part 164 are coupled.

According to this configuration, by pulling, in the forward direction, the front end of the second belt part 162 with a left hand of the user wearing the lumbar assistance device, and the front end of the fourth belt part 164 with a right hand of the user, the third belt part 163 is placed in close contact with the lower part of the posterior part of the gluteus maximus muscle of the human body, and the first belt part 161 can be placed in close contact around the lower back on the back side of the human body. Then, by coupling the front end of the second belt part 162 and the front end of the fourth belt part 164, the second belt part 162 and the fourth belt part 164 are placed in close contact with the lower back on the front side of the human body of the user, and thereby the first belt part 161, the second belt part 162 and the fourth belt part 164 can be wrapped once around the lower back of the human body of the user. At the same time, the third belt part 163 can be disposed in close contact with the lower part of the posterior part of the gluteus maximus muscle of the human body to extend left and right with respect to the buttocks of the human body. This makes it possible for the user to easily wear the lumbar assistance device so that the assistance force by the gas spring 24 can be reliably transmitted to the human body of the user.

Further, the left end of the first belt part 161, the right end of the first belt part 161, the rear end of the second belt part 162 and the rear end of the fourth belt part 164 are arranged at the position so as to be coincidental with one another on the human body of the user in the up-down direction. This configuration makes it possible to stably and closely wrap the first belt part 161, the second belt part 162 and the fourth belt part 164 once around the lower back of the user at the same position in the up-down direction of the user. As a result, it is possible to continue wearing the lumbar assistance device in a state where the position of the device with respect to the human body of the user is unchanged.

Further, the rear end of the second belt part 162 is connected to the left end of the first belt part 161. According to this configuration, the second belt part 162 and the first belt part 161 can be constituted of one continuous belt, and the configuration of the belt part can be simplified.

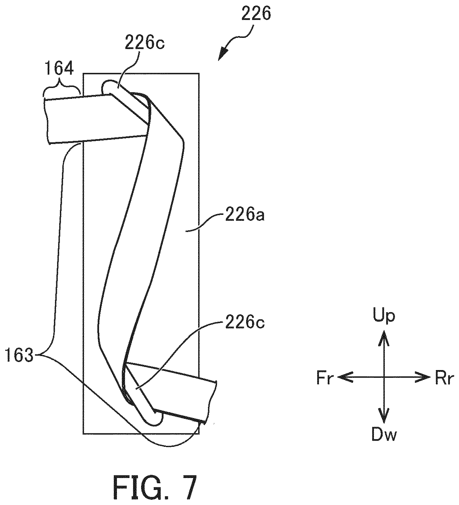

Next, a third embodiment of present invention will be described. A lumbar assistance device according to the third embodiment is different from the lumbar assistance device according to the second embodiment in that such a right belt support member 226 as shown in FIG. 7 is used in place of the right belt support member 126 in the second embodiment. The same member as in the second embodiment is denoted with the same reference numeral as in the second embodiment and will not be described. FIG. 7 is an explanatory view showing the right belt support member 226.

The right belt support member 226 has a rectangular belt support plate-shaped portion 226a, and to the support plate-shaped portion 226a, a pair of upper and lower U-shaped round handles 226c are fixed, through which a third belt part 163 can be passed. In the pair of round handles 226c, a right end of the third belt part 163 is hung and folded back in the same manner as in the pair of rod-shaped portions 126c and 126c of the second embodiment.

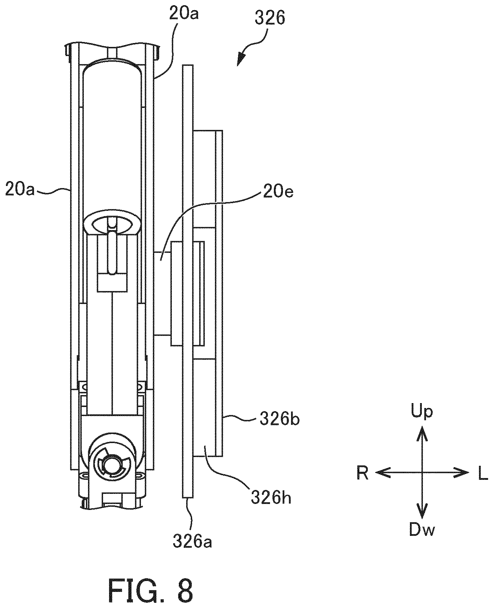

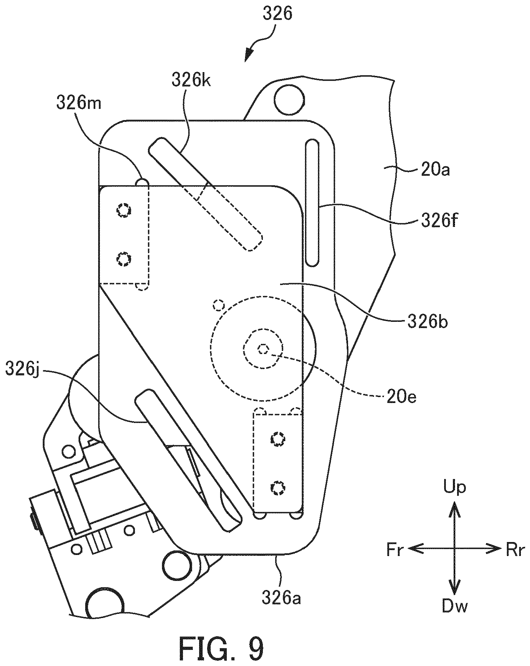

Next, a fourth embodiment of the present invention will be described. A lumbar assistance device according to the fourth embodiment is different from the lumbar assistance device according to the second embodiment in that such a right belt support member 326 as shown in FIGS. 8 and 9 is used in place of the right belt support member 126 in the second embodiment. The same member as in the second embodiment is denoted with the same reference numeral as in the second embodiment and will not be described. FIG. 8 is a front view showing the right belt support member 326. FIG. 9 is a side view showing the right belt support member 326.

As shown in FIG. 8, a rotary shaft 20e extending from a base plate 20a penetrates an unshown through hole formed in a plate-shaped belt support plate-shaped portion 326a constituting the right belt support member 326, and the belt support plate-shaped portion 326a is rotatably supported with respect to the base plate 20a.

As shown in FIG. 9, in a rear portion of an upper portion of the belt support plate-shaped portion 326a, a slit 326f is formed that is a through hole to which a right end of the first belt part 161 is fixed. In a middle portion of the upper portion of the belt support plate-shaped portion 326a in a front-rear direction, a slit 326k is formed that is a through hole through which a right end of the third belt part 163 is passed and folded back in a forward direction. In a front portion of the upper portion of the belt support plate-shaped portion 326a, a slit 326m is formed that is a through hole through which a front portion of the right end of the third belt part 163 folded back through the slit 326k is passed. In a front portion of a lower portion of the belt support plate-shaped portion 326a, a slit 326j is formed that is a through hole through which the right end of the third belt part 163 is passed and folded back in an upward direction. A method of passing and folding back the third belt part 163 through the slits 326j and 326k is the same as in a fifth embodiment described later (see FIG. 10) and will be described later.

Further, the right belt support member 326 includes a plate-shaped member 326b as shown in FIG. 8. The plate-shaped member 326b is fixed to the belt support plate-shaped portion 326a via a fixing portion 326h and increases rigidity of the right belt support member 326.

Next, a fifth embodiment of the present invention will be described. A lumbar assistance device according to the fourth embodiment is different from the lumbar assistance device according to the second embodiment in that such a right belt support member 426 as shown in FIG. 10 is used in place of the right belt support member 126 in the second embodiment. The same member as in the second embodiment is denoted with the same reference numeral as in the second embodiment and will not be described. FIG. 10 is a side view showing the right belt support member 426.

As shown in FIG. 10, the right belt support member 426 is constituted of a plate-shaped member. A rotary shaft 20e (see FIGS. 8 and 9) extending from a base plate 20a (see FIG. 1 and the like) penetrates an unshown through hole formed in a plate-shaped belt support plate-shaped portion 426a constituting the right belt support member 426, and the belt support plate-shaped portion 426a is rotatably supported with respect to the base plate 20a.

In a rear portion of an upper portion of the belt support plate-shaped portion 426a, a slit 426f is formed that is a through hole to which a right end of a first belt part 161 is fixed. In a middle portion of the upper portion of the belt support plate-shaped portion 426a in a front-rear direction, a slit 426k is formed that is a through hole through which a right end of a third belt part 163 is passed and folded back in a forward direction. In a front portion of the upper portion of the belt support plate-shaped portion 426a, a slit 426m is formed that is a through hole through which a front portion of the right end of the third belt part 163 folded back through the slit 426k is passed. In a rear portion of a lower portion of the belt support plate-shaped portion 426a, a slit 426i is formed that is a through hole through which the right end of the third belt part 163 is passed. In a front portion of the lower portion of the belt support plate-shaped portion 426a, a slit 426j is formed that is a through hole through which the right end of the third belt part 163 passed through a slit 426i is passed and folded back in an upward direction.

The right end of the third belt part 163 is passed through the slit 426j and folded upward by being passed through the slit 426j. Then, the right end of the third belt part 163 is folded forward by being passed through the slit 426k, further passed through the slit 426m and integrally connected to a fourth belt part 164.

An unshown left belt support member is constituted of a plate-shaped member having the same configuration as the belt support plate-shaped portion 426a of the right belt support member 426, but a left end of the first belt part 161 is fixed to a slit 426f of the unshown left belt support member, and a left end of the third belt part 163 is fixed to the slit 426i.

According to the above-described embodiment, the following effects can be exhibited. The unshown left belt support member as a first belt support member and the right belt support member 426 as a second belt support member are each constituted of a plate-shaped member in which slits 426j and 426k are formed as through holes, and the third belt part 163 is passed and folded back through the slits 426j and 426k.

This configuration makes it possible to configure the unshown left belt support member and the right belt support member 426 only by the plate-shaped members without providing the belt support plate-shaped portion 426a with a configuration such as a round handle, and to simplify the configuration of the left belt support member, the right belt support member 426.

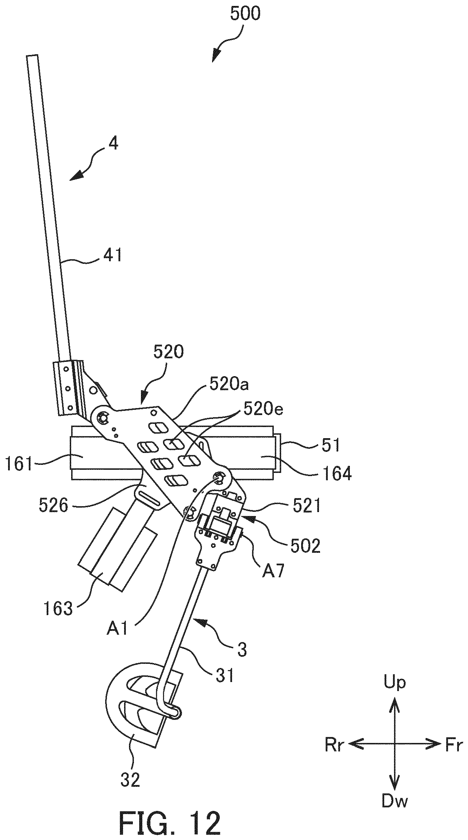

Next, a sixth embodiment of present invention will be described. A lumbar assistance device 500 according to the sixth embodiment is different from the lumbar assistance device 1 according to the first embodiment and the lumbar assistance device according to the second embodiment in that such a right belt support member 526 as shown in FIG. 11 is used in place of the right belt support member 126 in the second embodiment, in that a base plate 520a is used in place of the base plate 20a in the first and second embodiments and in that a downward swing member 521 is used in place of the downward swing member 21 in the first and second embodiments. The same member as in the first and second embodiments is denoted with the same reference numeral as in the second embodiment and will not be described. FIG. 11 is a side view showing the right belt support member 526 of the lumbar assistance device 500. FIG. 12 is a side view of the lumbar assistance device 500.

As shown in FIG. 11, the right belt support member 526 is constituted of a plate-shaped member. As shown in FIG. 12, an unshown rotary shaft extending from the base plate 520a of a biasing unit 502, in which a plurality of through holes 520e are formed, penetrates a through hole 526d (see FIG. 11) formed in a plate-shaped belt support plate-shaped portion 526a constituting the right belt support member 526 and rotatably supports the belt support plate-shaped portion 526a with respect to the base plate 520a.

In a rear portion of an upper portion of the belt support plate-shaped portion 526a, a slit 526f is formed that is a through hole to which a right end of a first belt part 161 is fixed. In a rear portion of a lower portion of the belt support plate-shaped portion 526a, a slit 526i is formed that is a through hole through which a right end of a third belt part 163 is passed. In a middle portion of the upper portion of the belt support plate-shaped portion 526a in a front-rear direction, a slit 526k is formed that is a through hole through which the right end of the third belt part 163 passed through the slit 526i is passed and folded back in a forward direction. In a front portion of the upper portion of the belt support plate-shaped portion 526a, a slit 526m is formed that is a through hole through which a front portion of the right end of the third belt part 163 folded back through the slit 526k is passed.

The right end of the third belt part 163 is passed through the slit 526i, also folded forward by being passed through the slit 526k, further passed through the slit 526m, and integrally connected to a fourth belt part 164.

An unshown left belt support member is constituted of a plate-shaped member having the same configuration as the belt support plate-shaped portion 526a of the right belt support member 526, but a left end of the first belt part 161 is passed through a slit 526f of the unshown left belt support member and fixed, and a left end of the third belt part 163 is passed through a slit 526i and fixed.

Also, in the downward swing member 521, a length between an axis A1 and an axis A7 is configured to be longer than in the downward swing member 21 in the first embodiment. According to this configuration, when a user wearing the lumbar assistance device 500 squats, it is avoided that a portion of the axis A7 abuts on and stabs in user's thigh.

The present invention is not limited to the above embodiments, and various changes and modifications are possible. For example, although a case where the upper body support member 4 supports the upper body of the user P from behind has been described as an example, the member may support the upper body of the user P from front.

Also, although a case of a pair of left and right thigh support members 3 has been described as an example, the member may be provided on either the left or right depending on a use application. Furthermore, although a case where the upper body support member 4 is provided over the entire left-right direction of the upper body of the user P has been described, for example, a pair of left and right upper body support members may be provided to be aligned with positions of left and right thighs.

Although a structure where the tension spring 22 is used as downward biasing means has been described as an example, a structure using another biasing means may be used. In order to obtain a desired spring constant, for example, biasing means such as a gas spring, a resin, a rubber or the like can be used.

Although a structure using the gas spring 24 as upward biasing means has been described as an example, a structure using another biasing means may be used. In order to obtain the desired spring constant, for example, biasing means such as a coil spring, a resin, a rubber or the like may be used.

Further, a configuration including the first belt part, the second belt part, the third belt part, the fourth belt part, the first belt support member, the second belt support member and the like is not limited to the configuration, in the present embodiment, including the first belt part 161, the second belt part 162, the third belt part 163, the fourth belt part 164, the right belt support member 126, 226, 326, 426, 526, the left belt support member 127 and the like. For example, these members may be configured opposite to the left and right of the present embodiment. Specifically, for example, in the present embodiment, the right end of the third belt part 163 is folded back in the right belt support member 526, but instead, the left end of the third belt part 163 may be folded back in the left belt support member.

### EXPLANATION OF REFERENCE NUMERALS

- 1, 500: lumbar assistance device
- 2, 502: biasing unit
- 20, 520: base member
- 20a, 520a: base plate
- 20b, 20c: rotation limit block
- 21, 521: downward swing member
- 22: tension spring (downward biasing means)
- 23: upward swing member
- 24: gas spring (upward biasing means)
- 3: thigh support member
- 30: fixture
- 31: frame
- 32: support
- 4: upper body support member
- 41: frame
- 42: attachment
- 43: hook
- 5: lower back belt
- 50: belt body
- 51: buckle
- 6: buttock belt
- 7: shoulder belt
- 126: right belt support member (second belt support member)
- 127: left belt support member (first belt support member)
- 161: first belt part
- 162: second belt part
- 163: third belt part
- 164: fourth belt part
- 426i, 426j, 426k, 426m: slit (through hole)
- A1, A2, A4, A4, A5, A6, A7: axis
- P: user (human body)

## Claims

1. A biasing unit for use in a lumbar assistance device constituting an exoskeleton, comprising:
a base member disposed on a side of a lumbar of a human body;
a downward swing member which is attached to a lower section in the base member to be rotatable around an axis along a left-right direction of the human body and to which a thigh support member supporting a thigh of the human body from front is fixed, the downward swing member swinging back and forth with respect to the base member integrally with the thigh support member;
downward biasing means, one end of which is attached to the base member to be rotatable around the axis along the left-right direction of the human body, and another end of which is attached to the downward swing member to be rotatable around the axis along the left-right direction of the human body, the downward biasing means biasing the downward swing member rearward when the downward swing member swings forward;
an upward swing member which is attached to an upper section in the base member to be rotatable around the axis along the left-right direction of the human body and to which an upper body support member supporting an upper body of the human body is fixed, the upward swing member swinging back and forth with respect to the base member integrally with the upper body support member; and
upward biasing means, one end of which is attached to the base member to be rotatable around the axis along the left-right direction of the human body, and another end of which is attached to the upward swing member to be rotatable around the axis along the left-right direction of the human body, the upward biasing means biasing the upward swing member rearward when the upward swing member swings forward.

2. The biasing unit according to claim 1, wherein the downward biasing means is a tension spring.

3. The biasing unit according to claim 1 or 2, wherein the upward biasing means is a gas spring.

4. A lumbar assistance device comprising:
the biasing unit according to any one of claims 1 to 3;
the thigh support member; and
the upper body support member,
to constitute an exoskeleton.

5. The lumbar assistance device according to claim 4, wherein the upper body support member supports the upper body of the human body from behind.

6. The lumbar assistance device according to claim 4 or 5, comprising:
a first belt part wrapped around a lower back on a back side of the human body;
a second belt part wrapped around the lower back on a front side in one of left and right directions of the human body;
a third belt part disposed adjacent to a lower part of a posterior part of a gluteus maximus muscle of the human body to extend left and right with respect to buttocks of the human body;
a fourth belt part connected to one end of the third belt part, and wrapped around the lower back on a front side in the other of the left and right directions of the human body; and
a belt support portion attached to the base member so that the first belt part, the second belt part, the third belt part and the fourth belt part are rotatable around the axis along the left-right direction of the human body,
wherein the belt support portion includes a first belt support member and a second belt support member,
one end of the first belt part is fixed to the first belt support member, the other end of the first belt part is fixed to the second belt support member,
one end of the second belt part is fixed to the first belt support member,
one end of the third belt part is fixed to the first belt support member, the other end of the third belt part is connected to one end of the fourth belt part, and is slidably supported with respect to the second belt support member, and
the other end of the second belt part and the other end of the fourth belt part are coupled.

7. The lumbar assistance device according to claim 6, wherein one end of the first belt part, the other end of the first belt part, one end of the second belt part and one end of the fourth belt part are arranged at a position so as to be coincidental with one another on the human body in an up-down direction.

8. The lumbar assistance device according to claim 6 or 7, wherein the first belt support member and the second belt support member are each constituted of a plate-shaped member in which a through hole is formed, and
the third belt part is passed through the through hole and folded back.

9. The lumbar assistance device according to any one of claims 6 to 8, wherein one end of the second belt part is connected to one end of the first belt part.
